Europäisches Patentamt

European Patent Office

Office européen des brevets

(19)

(11) Publication number: **0 688 501 A1**

(12) **EUROPEAN PATENT APPLICATION**

(21) Application number: **95108126.4**

(51) Int. Cl.[6]: **A21D 2/18**

(22) Date of filing: **26.05.95**

(30) Priority: **31.05.94 JP 139592/94**

(43) Date of publication of application:
**27.12.95 Bulletin 95/52**

(84) Designated Contracting States:
**DE FR GB IT**

(71) Applicant: **Ajinomoto Co., Inc.
No. 15-1, Kyobashi 1-chome,
Chuo-ku
Tokyo 104 (JP)**

(72) Inventor: **Ohtani, Masaru, c/o Ajinomoto Co.,
Inc.
No. 15-1, Kyobashi 1-chome
Chuo-ku,
Tokyo (JP)**
Inventor: **Usui, Naoki, c/o Ajinomoto Co., Inc.
No. 15-1, Kyobashi 1-chome
Chuo-ku,
Tokyo (JP)**
Inventor: **Okita, Norifumi, c/o Ajinomoto Co.,
Inc.
No. 15-1, Kyobashi 1-chome
Chuo-ku,
Tokyo (JP)**

(74) Representative: **Strehl Schübel-Hopf Groening
& Partner
Maximilianstrasse 54
D-80538 München (DE)**

(54) **Method for producing bread**

(57) Bread having good color and delicious taste and which is keepable well can be rapidly produced within a short period of time by a process, in which dough to which trehalose has been added is fermented with yeast and then baked.

EP 0 688 501 A1

Industrial Field of the Invention

The present invention relates to a method for producing bread and, more precisely, to a method for producing rapidly within a short period of time bread having good color and delicious taste and is keepable well, by baking dough that has been fermented with yeast.

Prior Art

There are already known some prior art methods, such as those mentioned below, relating to keepable bread, keepable dough and yeast useful for producing them.

(1) A method for producing bread from dough that has been fermented by two-stage fermentation, where yeast having a high intracellular trehalose content is used.

(2) Recombinant yeast having a high intracellular trehalose content and having high resistance to stress of cooling, drying, etc., and a method for producing bread from dough with the yeast.

(3) A method for producing bread from dough, where yeast having a high intracellular trehalose content and having high storing resistance and drying resistance is used.

(4) Yeast having a high intracellular trehalose content, which is incubated under reduced pressure by applying thereto air that has been cooled nearly to its freezing point, and a method for producing bread from dough with the yeast.

(5) Yeast, Saccharomyces cerevisiae having a degree or sporulation of 10 % or more and having an intracellular trehalose content of 5 % or more, which is such that frozen dough containing it generates 1 ml or more, per gram of the dough, of carbon dioxide; and dough containing the yeast.

These are described in the following patent publications.

(1) Russian Patent Publication No. 0455146 (February 21, 1975).

(2) European Patent Laid-Open No. 577915 (January 12, 1994).

(3) Russian Patent Publication No. 1611926 (December 7, 1990).

(4) Russian Patent Publication No. 1337405 (September 15, 1987).

(5) Japanese Patent Laid-Open No. 62-208273 (September 12, 1987).

In all of these prior art methods there is used yeast having a high intracellular trehalose content to produce dough and to produce bread from the dough.

On the other hand, there has been reported (6) a method for producing cookies from a raw material containing trehalose by subjecting the material to ordinary heat treatment of baking, frying, etc. (See Japanese Patent Laid-Open No. 4-370064 (December 22, 1992).)

In order to produce bread by baking dough that has been fermented with yeast in accordance with these prior methods, it is necessary to obtain the particular yeast that has been disclosed in the patent publications.

In the above-mentioned method for producing cookies, it is not indispensable to carry out the fermentation of the raw material with yeast during the process. It is difficult to apply this to a method for producing bread by baking dough that has been fermented with yeast.

Problems to be Solved by the Invention

The object of the present invention is to provide a method for producing rapidly within a short period of time bread having good color and delicious taste and which is keepable well by using conventional baker's yeast, without selecting and cultivating particular yeast and without specifically modifying the conventional bread-producing process and bread-producing equipment for the method.

Means for Solving the Problems

The present inventors have assiduously studied so as to attain the above-mentioned object and have found that

(1) if trehalose is mixed into the raw material of dough,

(a) it is possible to produce dough with good quality within an extremely short period of time, for example, within a much shorter period of time than according to conventional improved methods needing a shortened period of time for fermentation;

(b) the bread to be obtained by baking the dough has good color and delicious taste and, in particular, has good tissue and constitution with suitable bulkiness and is soft, fine and uniform; and in addition, it can be cut by hand or with a bread knife into slices having good profiles and conditions;

2

(c) even if the bread is kept at room temperature or in a refrigerator, it still has a wet taste without being dried to roughness;

(d) the condition of the fermented dough is good both after the first fermentation and the second fermentation and therefore it is easy to control the fermentation of the dough;

(e) even if the dough is kept cold or frozen for a relatively long period of time, its quality is still good without being deteriorated, or that is, the dough has good resistance to freezing storage;

(2) the amount of trehalose to be added to the raw material of dough is not strictly limited but is suitably from 1 to 10 % by weight relative to the total amount of the dough, from the results that have been obtained by producing bread from the dough containing a varying amount of trehalose; and

(3) various methods can be employed to add trehalose to the raw material of dough, without being specifically limited; for example, trehalose is previously added to yeast food, which is added to dough for the purpose of maximizing the ability of carbon dioxide and ethanol to expand the dough, and the yeast food thus containing trehalose is added to dough, although this embodiment is not indispensable but other embodiments may of course be employed where the addition of such yeast food is omitted or is conducted separately from the addition of trehalose and trehalose is directly added to the raw material of dough.

On the basis of the above-mentioned findings, the present invention has been completed. Specifically, the present invention comprises the following:

1st Embodiment

A method for producing bread, comprising fermenting dough with yeast, to which trehalose has been added, followed by baking it.

2nd Embodiment

The method for producing bread according to the 1st embodiment in which the amount of trehalose to be added is from 1 to 10 % by weight relative to the total amount of the dough.

3rd Embodiment

The method for producing bread according to the 1st embodiment in which trehalose is added to yeast food in the dough.

Trehalose to be used in the present invention is a kind of low-sweet oligosaccharide having a degree of sweetness of about 0.6 times that of sucrose, and it is a non-reducing sugar having two bonded glucose units. Trehalose widely exists in nature , for example, in plants, microorganisms, etc. It is extracted from the fruits or the rhizomes of plants or is obtained by hydrolysis of trehalamannan that is separated from the cells of yeast. Recently, it has become possible to obtain a large amount of trehalose by modifying the conditions for incubating amino acid-producing microbes. (See Japanese Patent Laid-Open Nos. 50-154485, 3-130084, 5-211882.)

Trehalose exists generally as its dihydrate, which is in the form of a fluid white powder or fine crystals. It is relatively easily soluble in water. In general, its powder or crystals are used. If desired, however, a powder of trehalose anhydride can also be used. It is also possible to use a solution of trehalose.

The present invention is directed to the production of various kinds of bread that is produced by fermenting dough with yeast followed by baking it, and the kind of bread to be produced by the present invention is not specifically limited.

The bread to be produced according to the present invention includes, for example, rich-shaped or lean-shaped British bread, buns, rolls, loaves, various French bread and rolls, Danish pastry, croissants, etc., and also low-fermented bread such as nann, chapati, etc., without being specifically defined with respect to the constitution and the kind of the dough to be used as well as to the physical properties of the dough and the method for producing the dough. In addition, the bread to be produced according to the present invention is not limited with respect to the baking means. The present invention is also directed to the dough itself, from which bread is produced according to the present invention.

The present invention is directed to various kinds of dough, which is stored in a refrigerator or freezer and which is baked into bread after being thawed if necessary.

Above all, the effect of the present invention is especially remarkable when frozen dough is used.

EP 0 688 501 A1

Effects of the Invention

According to the present invention, trehalose is added to and mixed uniformly with dough prior to the start of fermentation of the dough with yeast.

Trehalose may be added thereto as its powder. All or a part of trehalose may be added thereto as its solution. In particular, it is recommended that trehalose is added to and mixed with yeast food and thereafter the resulting mixture is added to dough (1st and 3rd embodiment).

The present invention is also directed to the yeast food composition itself to which trehalose has been added, as its one embodiment (embodiment 3).

In the present invention, the amount of trehalose to be added is not strictly defined. However, it has been found that the effective amount of trehalose to be added is from 1 to 10 % by weight, preferably from 3 to 7 % by weight, relative to the total amount of the dough, from the results of experiments that have been carried out by varying the amount of trehalose added (embodiment 2).

If the amount of trehalose added is less than 1 % by weight, the trehalose added does not yield any significant difference in quality between the bread produced from dough containing such a small amount of trehalose and that produced from trehalose-free dough. On the other hand, even if the amount of trehalose added is more than 10 % by weight, trehalose added does not also yield any significant difference in quality between the bread produced from dough containing such a large amount of trehalose and that produced from dough containing from 1 to 10 % by weight of trehalose. However, if the amount of trehalose added to dough is extremely larger than 10 % by weight, such as 30 % or more, such excessive amount of trehalose disadvantageously retards the fermentation of the dough containing it and often makes the bread produced from the dough too sweet or have unfavorable sweetness.

Sensual tests that have been conducted by the present inventors for testing the balance of taste and aroma of the bread produced according to the present invention and for testing the quality of the bread stored for a while have revealed the fact that the bread produced from dough containing from 3 to 7 % by weight of trehalose is significantly better than that produced from dough containing from 1 to less than 3 % by weight of trehalose and that produced from dough containing from more than 7 to 10 % by weight of trehalose.

The dough to which trehalose has been added is fermented with yeast and then baked to give bread, according to the conventional baking process.

Trehalose added to dough is effective in significantly shortening the time for the fermentation of the dough with yeast. The time for fermentation of dough with yeast varies, depending on the kind of bread to be produced. Therefore, although it is unsuitable to unconditionally refer to the effectiveness of trehalose to shorten the time for the fermentation of dough containing it, the addition of trehalose to dough is effective in shortening the time for the fermentation of the dough with yeast by about 20 to 50 % in any case.

In particular, it is extremely effective to add trehalose to dough with a large size in significantly shortening the time for the fermentation of the dough.

In addition, trehalose added to dough is also effective in improving the outward appearance and also the taste and aroma of the bread to be produced from the dough.

Moreover, trehalose added to dough is also effective in keeping the quality of fresh bread for a long period of time. Concretely, it is effective in keeping the outward appearance and also the taste and aroma, especially the wet taste and aroma, of fresh bread for a long period of time. This effect of trehalose is especially significant when bread is stored under conditions, in which bread is easily dried, for example, in a refrigerator.

Furthermore, trehalose added to dough is also effective in preventing the dough itself from being deteriorated while the dough is stored especially in a refrigerator or freezer, and therefore trehalose-containing dough can always have its good properties while being stored.

Examples

Comparative Example: Rich-shaped British Loaves

Raw materials of loaves shown in Table 1 below were prepared. These except water are all commercial products. Water used herein is city water. Glutinous flour, baker's yeast that had been previously activated with warm water, and the other materials were mixed and then kneaded along with tepid water in a baker's kneader (L-kneader; produced by Taisho Electric Co.) for 20 minutes. The resulting mixture was formed into balls by hand, and these were subjected to primary fermentation in a bowl covered with a wet cloth. Next, these were degassed, then rolled and shaped with a rolling pin and subjected to secondary fermentation in a loaf frame. The thus-fermented dough was cut in half. One of the two was directly baked in an oven kept at 180°C for 30 minutes to obtain a loaf. The other was doubly wrapped with a wrapping film and with an aluminium foil, and this was again wrapped with a wrapping film. The thus-wrapped dough was stored in the freezer of a domestic two-door refrigerator for 25 days. On the 26th day, the frozen dough was thawed and then baked under the same condition as above.

The loaf produced by baking the fresh dough and that produced by baking the thawed dough were weighed, from which the baking yields (%) were obtained according to the following equation. The fresh dough and the thawed dough were weighed before being baked.

$$A = b/a \times 100$$

where A is the baking yield (%);
a is the weight of the dough just before baked;
b is the weight of the loaf just after baked.

Table 1

|  | Basic Composition of Dough |
|---|---|
| Glutinous Flour | 250 g |
| Dry Yeast | 6 g |
| Sugar | 9 g |
| Salt | 5 g |
| Skimmed Milk | 10 g |
| Tepid Water | 200 g |
| Shortening | 13 g |

This is for one rich-shaped loaf having a size of 19.5 x 9.5 x 3.5 cm.

Examples 1 and 2

Using the dough having the same composition as in Comparative Example 1, rich-shaped loaves were produced in the same manner as in Comparative Example 1, except that trehalose was added to the dough in an amount of 3 % or 5 % by weight relative to the total amount of the dough. The addition of trehalose was conducted as follows: A powder of crystals of trehalose dihydrate was dissolved in boiling water and then cooled. The resulting solution was mixed with the dough.

The amount of trehalose added in each example was as follows, which is in terms of trehalose anhydride.

| Example 1: | 3.0 % by weight |
|---|---|
| Example 2: | 5.0 % by weight |

Results of Sensory Tests

The dough of Comparative Example and Examples 1 and 2 was cut in half. One of the two was baked into a rich-shaped loaf, cooled to room temperature and then sliced into slices with almost the same size. Each slice was doubly wrapped with a wrapping film and with an aluminium foil. The thus-wrapped slices were stored at room temperature (23°C on average) for 4 days or in a refrigerator for 25 days. The slices stored at room temperature were evaluated on the 5th day, and those stored in the refrigerator on the 26th day. On the other hand, the other of the two was stored in a freezer under the condition mentioned above for 25 days. On the 26th day, this was baked, cooled and then immediately evaluated.

The bread samples produced above were evaluated with respect to the following matters:

(1) Outward appearance: Softness, fineness, total color, color of the cross section of each slice, restoration to the original shape after pressed by hand, total appearance (as to whether or not it looks tasty).

(2) Taste: Degree of yeast aroma, favorable aroma (tasty aroma), wetness, degree of baking, total taste.

The above-mentioned two items (11 sub-items) were evaluated for each bread sample, according to the five-point ranking system mentioned below.

A "good" sample was ranked to have "3" points, while the "best" sample was to have "5" points and the "worst" sample was to have "1" point.

Seven panelists carried out the sensory tests and they had free conversation with any other during the tests. The time for evaluating one sample was 5 minutes.

Table 2 below shows the results of the sensual tests, in which the numeral values are the averages of the five panelists' points while omitting the highest and lowest points.

Table 2

| Comparative Example or Example | Comparative Example (Trehalose: 0%) | | | | Example 1 (Trehalose: 3%) | | | | Example 2 (Trehalose: 5%) | | | |
|---|---|---|---|---|---|---|---|---|---|---|---|---|
| Conditions of Bread Tested | Fresh bread tested. | Fresh dough was baked. | | | Fresh bread tested. | Fresh dough was baked. | | | Fresh bread tested. | Fresh dough was baked. | | |
| Results of Sensory Tests | * | ** | *** | **** | * | ** | *** | **** | * | ** | *** | **** |
| Baking yield (%) | 94.1 | -- | -- | 95.3 | 87.9 | -- | -- | 95.3 | 84.2 | -- | -- | 95.2 |
| Outward Appearance — Softness | 3.0 | 2.3 | 4.0 | 2.0 | 4.7 | 3.5 | 4.8 | 2.7 | 4.4 | 2.8 | 4.0 | 4.0 |
| Fineness | 3.5 | 2.5 | 4.0 | 1.9 | 4.4 | 2.8 | 4.0 | 2.4 | 4.3 | 2.8 | 3.0 | 3.0 |
| Total color | 4.0 | -- | -- | 3.2 | 3.0 | -- | -- | 3.7 | 3.3 | -- | -- | 3.4 |
| Color of the cross section of slice | 2.8 | -- | -- | 2.4 | 3.7 | -- | -- | 3.1 | 3.7 | -- | -- | 3.7 |
| Restoration to the original shape | 3.5 | 3.3 | 4.0 | 2.1 | 4.7 | 4.0 | 4.3 | 2.8 | 4.4 | 3.8 | 4.0 | 4.1 |
| Total appearance | 3.5 | 2.8 | 4.0 | 2.0 | 4.6 | 3.3 | 4.3 | 2.6 | 4.0 | 2.5 | 4.0 | 3.8 |
| Taste — Yeast odor | 3.9 | 4.0 | 3.3 | 3.3 | 3.0 | 3.3 | 3.3 | 2.6 | 3.4 | 3.5 | 3.5 | 3.1 |
| Tasty aroma | 3.6 | 1.8 | 3.8 | 2.3 | 4.0 | 3.0 | 4.0 | 2.4 | 4.0 | 2.3 | 4.0 | 3.1 |
| Wetness | 3.7 | 2.0 | 4.0 | 3.3 | 4.7 | 3.3 | 3.8 | 3.5 | 4.5 | 2.5 | 4.0 | 3.9 |
| Degree of baking | 3.7 | -- | -- | 2.2 | 3.8 | -- | -- | 2.5 | 4.5 | -- | -- | 3.3 |
| Total taste | 4.2 | 2.3 | 3.8 | 2.0 | 4.3 | 3.3 | 4.0 | 2.0 | 4.2 | 2.3 | 4.0 | 3.6 |
| Rank of total evaluation | 3 | 3 | 3 | 3 | 2 | 2 | 2 | 2 | 2 | 2 | 2 | 1 |

* Fresh bread was tested.
** Bread stored at room temperature for 4 days was tested on the 5th days.
*** Bread refrigerated for 25 days was tested on the 26th day.
**** Dough stored in a freezer for 25 days was thawed and baked on the 26th day.

As is obvious from the results shown in Table 2 above, there is a significant difference between the bread of Examples 1 and 2 where 3.0 % or 5.0 % by weight of trehalose was added to the dough and that of Comparative Example where no trehalose was added to the dough. Concretely, both the bread produced by baking the fresh dough and stored at room temperature and the bread produced by baking the thawed dough in Examples 1 and 2 were significantly superior to those in Comparative Example 1, with respect to both the outward appearance and the taste of the bread.

In particular, the total condition of the bread of Example 1 (where 3.0 % by weight of trehalose was added to the dough) that had been produced by baking the fresh dough and tested immediately after baking, after stored at room temperature or after refrigerated for 25 days was better than that of the bread of Example 2 (where 5.0 % by weight of trehalose was added to the dough) that had been produced and tested in the same manner.

On the other hand, the total condition of the bread of Example 2 produced from the thawed dough was better than that of the bread of Example 1 produced from the thawed dough.

Advantages of the Invention

According to the present invention where trehalose-containing dough is fermented with yeast and baked, as has been described hereinabove, it is possible to rapidly produce bread within a short period of time and the bread thus produced has good appearance and delicious taste and keeps well.

**Claims**

1. A method for producing bread, comprising fermenting dough with yeast followed by baking the fermented dough, wherein trehalose is added to the dough to be fermented.

2. The method for producing bread as claimed in claim 1, in which trehalose is added to yeast food in the dough.

3. The method for producing bread as claimed in claim 1 or claim 2, in which the amount of trehalose to be added is from 1 to 10% by weight relative to the total amount of the dough.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 013 no. 042 (C-564) ,30 January 1989 & JP-A-63 240758 (NATL FOOD RES INST;OTHERS: 01) 6 October 1988, * abstract * & CHEMICAL ABSTRACTS, vol. 110, no. 9, 27 February 1989 Columbus, Ohio, US; abstract no. 74134, KOBAYASHI SHOICHI 'FOODS CONTAINING TREHALOSE WITH GOOD ANTICARIES AND BIFIDOBACTERIUM GROWTH-PROMOTING ACTIVITIES' page 525; * indexed terms * * abstract * --- | 1-3 | A21D2/18 |
| X | PATENT ABSTRACTS OF JAPAN vol. 017 no. 243 (C-1058) ,17 May 1993 & JP-A-04 370064 (EZAKI GLICO CO LTD) 22 December 1992, | 1-3 | |
| Y | * abstract * --- | 1-3 | TECHNICAL FIELDS SEARCHED (Int.Cl.6) |
| P,X | EP-A-0 606 753 (HAYASHIBARA BIOCHEM LAB) 20 July 1994 * page 11, line 39 - line 44; claims 1,24-26,31-33; example B9 * * page 11, line 9 - line 12 * --- | 1-3 | A21D |
| P,X | EP-A-0 636 693 (HAYASHIBARA BIOCHEM LAB) 1 February 1995 * page 12, line 27 - line 32; claims 1,13,16,21; example B12 * --- | 1-3 | |
| P,X | EP-A-0 600 730 (HAYASHIBARA SEIBUTSU KAGAKU KENKYUJO K.K.) * page 4, line 51 - line 54; claims 1,15,17; example 9 * --- | 1-3 | |

-/--

The present search report has been drawn up for all claims

| Place of search | Date of completion of the search | Examiner |
|---|---|---|
| THE HAGUE | 5 October 1995 | Coucke, A |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | PATENT ABSTRACTS OF JAPAN<br>vol. 950 no. 003<br>& JP-A-07 079689 (SANEI GEN F F I INC)<br>28 March 1995,<br>* abstract *<br>--- | 1-3 | |
| X,P | PATENT ABSTRACTS OF JAPAN<br>vol. 18 no. 648 (C-1284) ,8 December 1994<br>& JP-A-62 053722 (NIPPON SHOKUHIN KAKO CO LTD) 13 September 1994,<br>* abstract *<br>--- | 1-3 | |
| Y | DATABASE WPI<br>Section Ch, Week 9340<br>Derwent Publications Ltd., London, GB;<br>Class D03, AN 93-316552<br>& JP-A-05 227 889 (MITSUI SUGAR CO LTD) ,<br>7 September 1993<br>* abstract *<br>----- | 1-3 | TECHNICAL FIELDS SEARCHED (Int.Cl.6) |

The present search report has been drawn up for all claims

| Place of search | Date of completion of the search | Examiner |
|---|---|---|
| THE HAGUE | 5 October 1995 | Coucke, A |

EPO FORM 1503 03.82 (P04C01)